# EUROPÄISCHE PATENTSCHRIFT

(11) **EP 2 013 123 B1**
(45) Veröffentlichungstag und Bekanntmachung des Hinweises auf die Patenterteilung: **12.05.2010**
(21) Anmeldenummer: 07721921.0
(22) Anmeldetag: 16.02.2007
(51) Int. Cl.: B65G 57/30, B65G 59/06

(54) **BEREITSTELLUNGSMODUL FÜR PALETTEN MIT EINEM TRANSPORTMODUL, DAS UNTER DEN STAPELPLÄTZEN DER PALETTEN SAMT EINER HEBEEINRICHTUNG VERFAHRBAR IST**
PREPARATION MODULE FOR PALLETS COMPRISING A TRANSPORT MODULE WHICH CAN BE DISPLACED BELOW THE PALLET STACK POSITIONS TOGETHER WITH A LIFTING DEVICE
MODULE DE PRÉPARATION POUR DES PALETTES COMPRENANT UN MODULE DE TRANSPORT QUI PEUT ÊTRE DÉPLACÉ EN-DESSOUS DES EMPLACEMENTS D'EMPILEMENT DES PALETTES, AVEC UN DISPOSITIF DE LEVAGE

(30) Priorität: 21.04.2006 DE 102006019153
(43) Veröffentlichungstag der Anmeldung: 14.01.2009
(73) Patentinhaber: FELSOMAT GmbH & Co. KG, 75203 Königsbach-Stein (DE)
(72) Erfinder: JAEGER, Helmut F., 75203 Königsbach-Stein (DE)
(74) Vertreter: Kohler Schmid Möbus
(86) Internationale Anmeldenummer: PCT/DE2007/000304
(87) Internationale Veröffentlichungsnummer: WO 2007/121698

(56) Entgegenhaltungen:
- DE-A1- 19 849 391
- FR-A1- 2 753 184

## Beschreibung

Die Erfindung betrifft ein Bereitstellungsmodul für Paletten gemäß dem Oberbegriff des Anspruchs 1.

Ein derartiges Bereitstellungsmodul ist bereits aus DE 19 849 391 A1 bekannt.

Ein Bereitstellungsmodul ist bekannt geworden durch die Firmendruckschrift "Magaziniersystem für Werkstücke und Paletten", Siemens, 1985.

In modernen Fertigungs- und Montageprozessen werden Werkstücke und auch Werkzeuge für Transport und Lagerung oftmals nicht unmittelbar, sondern mit standardisierten Werkstückträgern und Werkzeugträgern, genannt Paletten, gehandhabt. In einer Palette können ein oder mehrere Werksstücke oder Werkzeuge abgelegt werden, wobei die Palette die Werkstücke oder Werkszeuge vor Beschädigungen wie Kratzern oder Dellen durch Greifwerkzeuge oder durch versehentlichem Kontakt mit harten Gegenständen schützt. Im folgenden wird der Einfachheit halber nur noch von Werkstücken gesprochen, die in einer Palette transportiert werden.

Der Ablauf von Fertigungs- und Montageprozessen macht es oftmals erforderlich, Werkstücke vor einer Bearbeitung zwischenzulagern und bei Bedarf einer Bearbeitungseinrichtung zuzuführen. Infolgedessen müssen auch die Paletten zwischengelagert werden.

In einem einfachen Lager können Paletten nebeneinander auf dem Boden abgestellt werden. Dies erfordert sehr viel Lagerfläche. Um Lagerfläche zu sparen sind zum einen Hochregallager mit mehreren, übereinanderliegenden Fächen bekannt. Zum anderen können Paletten aufeinander gestapelt werden. In beiden Fällen muss eine Transporteinrichtung zur Handhabung einzelner Paletten einen relativ großen vertikalen Hub überstreichen können, entsprechend der Höhe der obersten Regalfächer des Hochregallagers oder auch entsprechend der Höhe eines Stapels von Paletten. Entsprechende Transporteinrichtungen sind teuer. Außerdem können große vertikale Verfahrwege der Transporteinrichtung die Bereitstellung von Paletten verlangsamen.

Das Magaziniersystem von Siemens, vgl. oben, gestattet die Handhabung von im Grundsatz beliebig hohen Palettenstapeln mit einem Hub einer Transporteinrichtung von nur ca der Höhe einer Palette. Das Magaziniersystem umfasst zwei Stapelplätze, die jeweils eine eigene Hubeinrichtung aufweisen. Die Hubeinrichtung ist unterhalb des Stapelraums eines Stapelplatzes angeordnet. Jeder Stapelraum umfasst einen Satz von vier einfahrbaren Halteklinken. Mit den Halteklinken kann die unterste Palette eines Stapels gehalten werden. Um eine Palette von einem gehaltenen Stapel zu entstapeln, fährt die Hubeinrichtung an die unterste Palette, die Halteklinken werden gelöst, die Hubeinrichtung fährt den Stapel um eine Palettenhöhe nach unten, und die Halteklinken werden wieder eingefahren, um die zweitunterste Palette mit dem restlichen Stapel zu halten. Die unterste Palette wird dann allein von der Hebeeinrichtung gehalten. Zum Anstapeln kann dieser Prozess rückwärts durchlaufen werden. Zwischen den Stapelplätzen ist eine Fertigungsstation angeordnet, und Paletten können zwischen den Hebeeinrichtungen und der Fertigungsstation mit einem Transportkamm verfahren werden.

Nachteilig an diesem Magaziniersystem ist es, dass für jeden Stapelplatz eine eigene Hebeeinrichtung benötigt wird. Dadurch wird das Magaziniersystem bei größerem Lagerbedarf schnell teuer. Weiterhin müssen die Halteklinken an den Stapelplätzen für die Stapelprozesse beweglich sein, wodurch die Halteklinken wenig robust sind. Dadurch wird die Stapelhöhe, die noch sicher zu handhaben ist, begrenzt.

### Aufgabe der Erfindung

Demgegenüber ist es die Aufgabe der vorliegenden Erfindung, ein Bereitstellungsmodul für Paletten vorzustellen, das einfacher und robuster aufgebaut ist. Insbesondere soll das Magaziniersystem auch eine große Zahl von Stapelplätzen kostengünstig handhaben können, wobei an jedem Stapelplatz eine größere Stapelhöhe sicher nutzbar sein soll.

### Kurze Beschreibung der Erfindung

Diese Aufgabe wird gelöst durch ein Bereitstellungsmodul der eingangs vorgestellten Art, das dadurch gekennzeichnet ist,
dass die Haltemittel an den Stapelplätzen starr ausgebildet sind.

Falls mehrere Transportmodule eingesetzt werden, kömmt es im Allgemeinen zu gegenseitigen Behinderungen der Transportmodule, und jedes Transportmodul kann nur einen Teil der Stapelplätze erreichen. Erfindungsgemäß gibt es dann aber Stapelplätze, die von mehreren Transportmodulen erreicht werden können (Überlappplätze), so dass Paletten zwischen den Transportmodulen mittels der Überlappplätze übergeben werden können.

Das Transportmodul kann in x-Richtung nicht nur von Stapelplatz zu Stapelplatz verfahren werden, sondern auch zwischen den Stapelplätzen halten. Dadurch wird bei der Erfindung eine Beweglichkeit der Haltemittel (ein- oder ausfahren) - wie im Stand der Technik beim Auf- und Abstapeln benötigt - entbehrlich. Eine Palette oder auch ein Stapel von Paletten kann aus den Haltemitteln ausgehoben werden und in x-Richtung seitlich neben die Haltemittel verfahren werden, so dass die Haltemittel eine Vertikalbewegung der Palette oder des Stapels von Paletten nicht mehr behindern. Infolgedessen können die Haltemittel starr, d.h. unbeweglich ausgeführt werden. Die starren Haltemittel können robuster ausgeführt werden als bewegliche Haltemittel.

### Bevorzugte Ausführungsformen der Erfindung

Besonders bevorzugt ist eine Ausführungsform des erfindungsgemäßen Bereitstellungsmoduls, die vorsieht, dass das mindestens eine Transfermodul in einer horizontalen y-Richtung verfahrbar ist, wobei die x-Richtung und die y-Richtung senkrecht zueinander orientiert sind, dass mehrere zweite Stapelplätze vorgesehen sind, wobei die zweiten Stapelplätze in x-Richtung hintereinander in einer zweiten Reihe angeordnet sind, und wobei die erste Reihe und die zweite Reihe in y-Richtung benachbart angeordnet sind, und dass das mindestens eine Transportmodul in x-Richtung auch unterhalb einer Vielzahl der zweiten Stapelplätze beliebig verfahrbar ist. Die Reihe der zweiten Stapelplätze erhöht die Kapazität des Bereitstellungsmoduls erheblich, wobei alle Stapelplätze von wenigstens einer Seite frei zugänglich sind, etwa für Portale. Im Rahmen der Erfindung können auch drei oder noch mehr Reihen von Stapelplätzen in y-Richtung benachbart angeordnet werden, wobei dann innen liegende Stapelplätze bevorzugt nur zur Lagerung / Pufferung eingesetzt werden.

Bei einer Weiterbildung dieser ausführungsform ist das mindestens eine Transfermodul in y-Richtung durch eine feste Achse mit zwei Anschlägen verfahrbar. Mit dieser Ausführungsform können die zweiten Stapelplätze besonders kostengünstig angefahren werden.

Eine ganz besonders bevorzugte Ausführungsform des erfindungsgemäßen Bereitstellungsmoduls ist dadurch gekennzeichnet, dass genau ein Transportmodul vorgesehen ist, und dass das Transportmodul in x-Richtung unterhalb aller Stapelplätze beliebig verfahrbar ist. Diese Ausführungsform ist besonders einfach und vermeidet Koordinationsbedarf zwischen mehreren Transportmodulen. Sie ist besonders bei einer geringen Zahl von Stapelplätzen, etwa 2-10 Stapelplätzen, geeignet.

Bei einer ebenfalls bevorzugten, alternativen Ausführungsform sind mehrere Transportmodule vorgesehen, wobei jeder Stapelplatz von wenigstens einem der Transportmodule angefahren werden kann. Durch mehrere Transportmodule kann die Bereitstellung von Paletten beschleunigt werden, insbesondere bei einer großen Zahl von Stapelplätzen im Bereitstellungsmodul, etwa mehr als 10 Stapelplätzen.

Bevorzugt ist weiterhin eine Ausführungsform, bei der das mindestens eine Transfermodul in x-Richtung mittels einer NC-Linearachse verfahrbar ist. Dadurch lassen sich auch kurze Bewegungen, wie sie zum Aus- und Einfahren von Paletten(stapeln) eingesetzt werden, gut kontrollieren.

Vorteilhaft ist auch eine Ausführungsform, bei der die Hebeeinrichtung als Scherenhubtisch ausgebildet ist. Der Scherenhubtisch ist einfach aufgebaut und in der Praxis bewährt.

Bevorzugt ist auch eine Ausführungsform, die vorsieht, dass mindestens ein Stapelplatz, der sich an einem Ende einer Reihe von Stapelplätzen befindet, auf einem Rollwagen ausgebildet ist, und dass der Rollwagen vom übrigen Bereitstellungsmodul abkoppelbar ist. Über den Rollwagen können Paletten in das Bereitstellungsmodul ein- und ausgeschleust werden. Der Stapelplatz des Rollwagens kann im angekoppelten Zustand erfindungsgemäß mit mindestens einem Transportmodul des Bereitstellungsmoduls angefahren werden.

Bei einer vorteilhaften Weiterbildung dieser Ausführungsform sind zwei Stapelplätze, die sich an gegenüberliegenden Enden einer Reihe von Stapelplätzen befinden, jeweils auf einem Rollwagen ausgebildet. Dies erleichtert eine lineare Verkettung von mehreren Bereitstellungsmodulen.

Eine andere, vorteilhafte Weiterbildung sieht vor, dass eine Schienenführung für einen Rollwagen vorgesehen ist, insbesondere wobei die Schienenführung zu einem weiteren Bereitstellungsmodul führt. Durch die Schienenführung wird die Handhabung des Rollwagens erleichtert.

Bei einer vorteilhaften Ausführungsform des erfindungsgemäßen Bereitstellungsmoduls weisen die Kontermittel und die Haltemittel in x-Richtung jeweils eine Breite auf, die sehr viel kleiner ist als die Breite PB einer aufgehängten Palette in der x-Richtung. Typischerweise beträgt die breite der Haltemittel und Kontermittel weniger als 1/5 von PB. Dies verkürzt die Wege beim seitlichen Einfahren und Ausfahren einer Palette. Typischerweise stehen die Kontermittel von der übrigen Palette in y-Richtung ab und/oder die Haltemittel ragen in y-Richtung in den Stapelraum hinein.

Bevorzugt ist es weiterhin, wenn das Breitstellungsmodul wenigstens drei erste Stapelplätze aufweist. Ab dieser Zahl von Stapelplätzen kommen die Einsparungen bezüglich der Anzahl der Hebeeinrichtungen gut zur Geltung.

Vorteilhaft ist eine Ausführungsform, bei der wenigstens ein Portal vorgesehen ist, welches Werkstücke einer Palette eines Stapelplatzes (=Bereitstellungsplatz) handhaben kann. Das Portal kann die Werkstücke an eine Bearbeitungsmaschine (etwa eine Drehmaschine) übergeben. An einem Bereitstellungsplatz wird in der Regel nur eine Palette angeordnet.

Bei einer bevorzugten Weiterbildung dieser Ausführungsform sind wenigstens zwei Stapelplätze als Bereitstellungsplätze ausgebildet. Die beiden Bereitstellungsplätze werden vom selben Portal bedient. Dann kann an einem Bereitstellungsplatz ein Palettenwechsel durchgeführt werden, während am anderen Bereitstellungsplatz die Werkstücke der Bearbeitung zugeführt werden. Dadurch kann die Auslastung einer Bearbeitungsmaschine am Portal erhöht werden.

Eine andere vorteilhafte Weiterbildung sieht vor, dass das Portal quer zur x-Richtung verläuft. Dann beeinträchtigt das Portal andere Stapelplätze als die Bereitstellungsplätze besonders wenig.

Vorteilhaft ist auch eine Weiterbildung, bei der an dem wenigstens einen Portal wenigstens eine Werkstück-Bearbeitungsmaschine, insbesondere eine Drehmaschine oder eine Fräsmaschine, angeordnet ist. Die Bearbeitungsmaschine kann mittels des Portals und des übrigen Bereitstellungsmoduls mit Werkstücken versorgt werden.

Bevorzugt ist auch eine Ausführungsform, die dadurch gekennzeichnet ist, dass ein Vertaktungsplatz vorgesehen ist, der mehrere Sätze von Haltemitteln aufweist, die in x-Richtung um einen Betrag V gegeneinander versetzt am Bereitstellungsmodul angeordnet sind,
wobei der Betrag V kleiner ist als die Breite PB einer am Vertaktungsplatz aufgehängten Palette in x-Richtung. Am Vertaktungsplatz kann eine Palette in mehreren x-Positionen aufgehängt werden. Jede Position ist optimiert für den Zugriff auf eines oder mehrere der Werkstücke auf der Palette für beispielsweise ein Portal. Dadurch kann eine Bewegungsachse beim Zugriff auf das Werkstück, etwa am Portal, eingespart werden. Man beachte, dass mehrere Sätze von Haltemitteln bevorzugt, aber nicht notwendigerweise äquidistant am Vertaktungsplatz angeordnet sind.

Eine vorteilhafte Weiterbildung sieht vor, dass auf den Paletten mehrere Werkstücke mit einem Versatz von V in der x-Richtung anordenbar sind. Die Werkstückpositionen sind dabei bevorzugt durch Halter auf der Palette definiert. Die standardisierten Paletten erleichtern die Vertaktung.

Eine andere, bevorzugte Ausführungsform des erfindungsgemäßen Bereitstellungsmoduls sieht vor, dass ein Vertaktungsrahmen vorgesehen ist, an dem mindestens ein Satz von Haltemitteln vorgesehen ist, und dass der Vertaktungsrahmen mittels einer Transportvorrichtung in x-Richtung verfahrbar ist. Mit dem beweglichen Vertaktungsrahmen ist eine Vertaktung unabhängig vom Transportmodul möglich.

Ganz besonders bevorzugt ist eine Ausführungsform, bei der zumindest ein Teil der Stapelplätze durch Stapelplatzmoduleinheiten ausgebildet ist, wobei die Stapelplatzmoduleinheiten in x-Richtung mit gleichartigen Stapelplatzmoduleinheiten reversibel verbindbar sind. Durch die Stapelplatzmoduleinheiten ist das Bereitstellungsmodul leicht umzubauen oder zu erweitern. Eine reversible Verbindbarkeit kann erfindungsgemäß auch in y-Richtung zwischen benachbarten Reihen bestehen.

In den Rahmen der vorliegenden Erfindung fällt auch ein Verfahren zum Aufstapeln einer zusätzlichen Palette unter einen Stapel von Paletten, wobei der Stapel mittels eines Satzes von Kontermitteln einer untersten Palette des Stapels in einem Satz von Haltemitteln eingehängt ist, und wobei die zusätzliche Palette ebenfalls einen Satz von Kontermitteln aufweist, mit folgenden Schritten:
a) die zusätzliche Palette wird von unten an die unterste Palette des Stapels gefahren (=Anstapeln);
b) die zusätzliche Palette samt Stapel wird so weit angehoben, dass die Kontermittel der untersten Palette des Stapels vollständig oberhalb der Haltemittel angeordnet sind (=Ausheben);
c) die zusätzliche Palette samt Stapel wird so weit horizontal in eine x-Richtung verfahren, dass die Kontermittel der untersten Palette vollständig seitlich der Haltemittel angeordnet sind (=Ausfahren);
d) die zusätzliche Palette samt Stapel wird so weit angehoben, dass die Kontermittel der zusätzlichen Palette vollständig oberhalb der Haltemittel angeordnet sind (=Anheben);
e) die zusätzliche Palette samt Stapel wird so weit horizontal in x-Richtung zurück verfahren, dass die Kontermittel der zusätzlichen Palette direkt oberhalb der Haltemittel liegen (=Einfahren);
f) die zusätzliche Palette samt Stapel wird abgesenkt, so dass die Kontermittel der zusätzlichen Palette in den Haltemitteln einhaken (=Einhaken). Der erfindungsgemäße Stapelprozess kommt ohne eine Beweglichkeit der Haltemittel aus, wodurch die Haltemittel robuster ausgeführt werden können und höhere Stapel handhabbar sind. Mit einen vertikalen Hub von etwas mehr als einer Palettenhöhe können grundsätzlich beliebig hohe Stapel aufgestapelt werden. Erfindungsgemäß kann anstelle einer zusätzlichen Palette auch ein zusätzlicher Palettenstapel unter einen ersten Palettenstapel gestapelt werden, wobei beim Schritt d) aber so weit angehoben werden muss, dass die Kontermittel der untersten Palette des zusätzlichen Stapels vollständig oberhalb der Haltemittel angeordnet sind.

Ebenfalls in den Rahmen der vorliegenden Erfindung fällt ein Verfahren zum Abstapeln einer untersten Palette von einen Stapel von Paletten, wobei der Stapel mittels eines Satzes von Kontermitteln der untersten Palette des Stapels in einem Satz von Haltemitteln eingehängt ist, und wobei eine zweitunterste Palette ebenfalls einen Satz von Kontermitteln aufweist, mit folgenden Schritten:
a) der Stapel wird so weit angehoben, dass die Kontermittel der untersten Palette des Stapels vollständig oberhalb der Haltemittel angeordnet sind (=Ausheben);
b) der Stapel wird so weit horizontal in eine x-Richtung verfahren, dass die Kontermittel der untersten Palette vollständig seitlich der Haltemittel angeordnet sind (=Ausfahren);
c) der Stapel wird so weit abgesenkt, dass die Kontermittel der untersten Palette vollständig unterhalb der Haltemittel angeordnet sind, und die Kontermittel der zweituntersten Palette vollständig oberhalb der Haltemittel angeordnet sind (=Absenken);
d) der Stapel wird so weit horizontal in x-Richtung zurück verfahren, dass die Kontermittel der zweituntersten Palette direkt oberhalb der Haltemittel liegen (=Einfahren);
e) der Stapel wird abgesenkt, so dass die Kontermittel der zweituntersten Palette in den Haltemitteln einhaken (=Einhaken);
f) die unterste Palette wird abgesenkt, so dass diese von der zweituntersten Palette abgetrennt wird (=Abstapeln). Wiederum sind für diesen Stapelprozess keine beweglichen Haltemittel erforderlich. Erfindungsgemäß kann anstelle einer untersten Palette auch ein unterer Teilstapel abgestapelt werden, wobei beim Schritt c) aber so weit abgesenkt werden muss, dass die Kontermittel der obersten Palette des Teilstapels vollständig unterhalb der Haltemittel angeordnet sind, und die Kontermittel der nächsthöheren Palette vollständig oberhalb der Haltemitteln angeordnet sind.

Die beiden genannten Verfahren werden vorteilhafter Weise mit einem erfindungsgemäßen Bereitstellungsmodul durchgeführt.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Zeichnung und detaillierte Beschreibung der Erfindung

Die Erfindung ist in der Zeichnung dargestellt und wird anhand von Ausführungsbeispielen näher erläutert. Es zeigt:
- Fig.1: eine schematische Schrägansicht eines erfindungsgemäßen Bereitstellungsmoduls mit einer Reihe von Stapelplätzen;
- Fig. 2a: das Bereitstellungsmodul von Fig. 1 in einer schematischen Seitenansicht;
- Fig. 2b: einen Detailansicht des Bereitstellungsmoduls von Fig. 1;
- Fig. 3a: eine schematische Aufsicht auf einen Satz Haltemittel und einen Satz Kontermittel einer Palette im eingehakten Zustand;
- Fig. 3b: eine schematische Aufsicht auf einen Satz Haltemittel und einen Satz Kontermittel einer Palette im ausgefahrenen Zustand;
- Fig. 4a-4h: eine Abfolge von Seitenansichten von Haltemitteln und Paletten mit Kontermitteln beim erfindungsgemäßen Abstapeln;
- Fig. 5: eine schematische Darstellung eines Vertaktungsplatzes für ein erfindungsgemäßes Bereitstellungsmodul in Aufsicht;
- Fig. 6: eine schematische Darstellung eines Vertaktungsrahmens für ein erfindungsgemäßes Bereitstellungsmodul in Aufsicht;
- Fig. 7: eine schematische Darstellung eines erfindungsgemäßen Bereitstellungsmoduls mit zwei Reihen von Stapelplätzen.

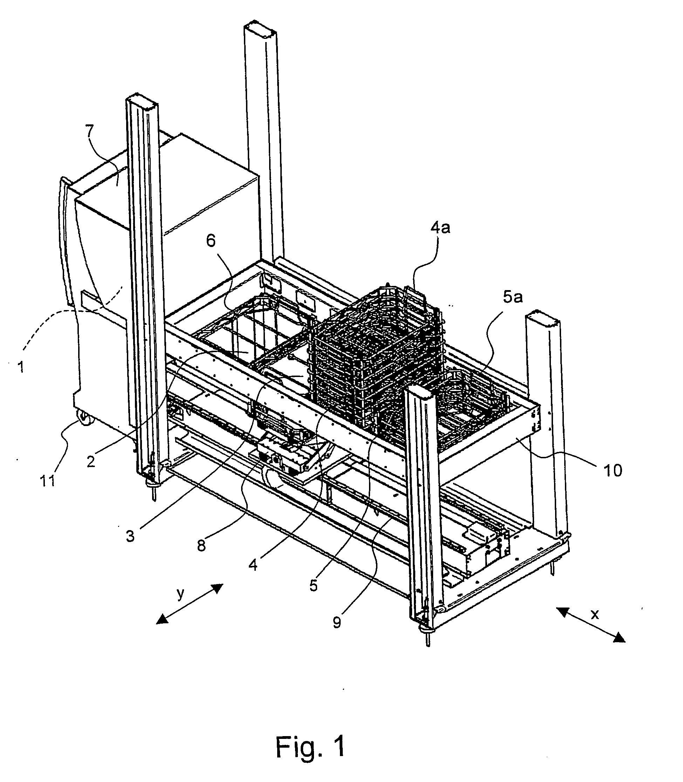

Die **Figur 1** zeigt ein erfindungsgemäßes Bereitstellungsmodul mit insgesamt fünf Stapelplätzen 1, 2, 3, 4, 5 für Paletten 6. Die Stapelplätze 1-5 sind in einer horizontalen x-Richtung hintereinander angeordnet. Der Stapelplatz 1 ist in einem Rollwagen 7 ausgebildet. Auf dem Stapelplatz 3 sind derzeit keine Paletten eingehängt, und auf Stapelplatz 2 ist eine einzelne Palette 6 eingehängt. Auf den Stapelplätzen 4 und 5 sind jeweils Palettenstapel 4a, 5a eingehängt.

Unter den Stapelplätzen 1-5 ist ein Transportmodul 8 angeordnet, das entlang einer Führung 9 in x-Richtung unterhalb aller Stapelplätze 1 bis 5 stufenlos verfahrbar ist.

Das Bereitstellungsmodul weist einen ortsfesten Rahmen 10 auf, innerhalb dessen die Stapelplätze 2 bis 5 ausgebildet sind. Der Rollwagen 7 hingegen kann vom Rahmen 10 abgetrennt (und auch an den Rahmen 10 wieder angebaut) und auf Rollen 11 verfahren werden.

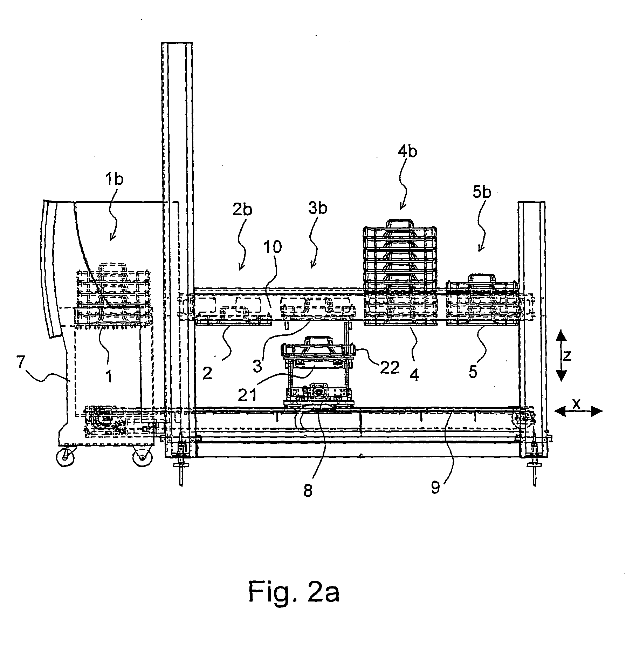

**Figur 2a** zeigt eine Seitenansicht des Bereitstellungsmoduls von Fig. 1. Das Transportmodul 8 weist eine Hebeeinrichtung 21, nämlich einen Scherenhubtisch auf, mit der gerade eine Palette 22 untergriffen ist. Die Führung 9 des Transportmoduls erstreckt sich bis unter den Stapelplatz 1 im Rollwagen 7 und kann insbesondere den dortigen Stapelplatz 1 bedienen.

Die Stapelplätze 1 bis 5 weisen jeweils einen Stapelraum 1 b-5b auf, der sich vertikal (nach oben) erstreckt und in dem ein Palettenstapel gebildet werden kann. Das Be- und Entstapeln erfolgt von unten. Nach unten werden die Stapelräume 1 b-5b durch Haltemittel definiert, die am Rahmen 10 bzw. am Rollwagen ausgebildet sind.

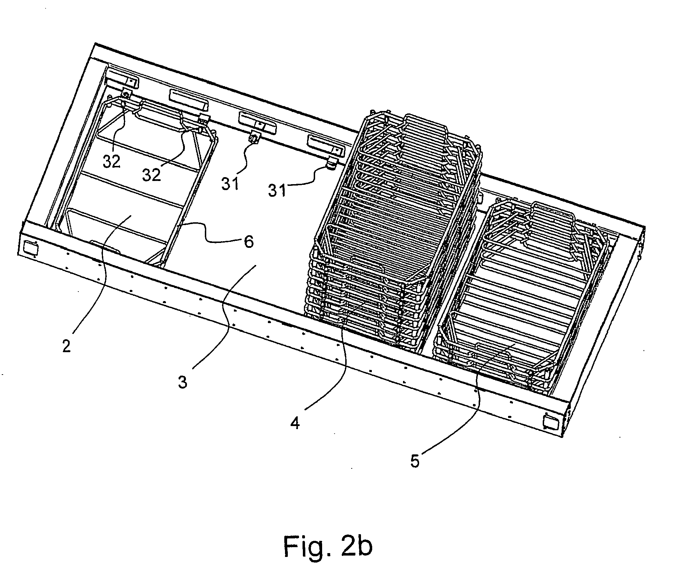

**Figur 2b** zeigt eine Detailansicht der Stapelplätze 2 bis 4 der des Bereitstellungsmoduls von Fig. 1. Am Stapelplatz 3 sind gut die Haltemittel 31 zu erkennen, in die eine Palette eingehakt werden kann. An der Palette 6 am Stapelplatz 1 sind auch die Kontermittel 32 zu erkennen.

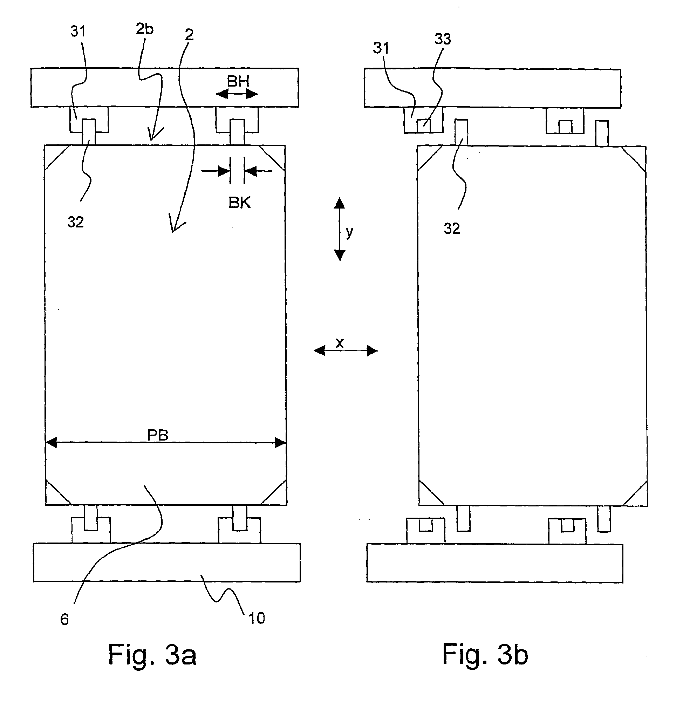

Der Einhakmechanismus ist auch in **Figur 3a** schematisch dargestellt. Figur 3a zeigt eine Palette 6 im eingehakten Zustand am Stapelplatz 2. Am Rahmen 10 des Bereitstellungsmoduls ist einen Satz von vier Haltemitteln 31 befestigt. Die Haltemittel 31 ragen in y-Richtung in den Stapelraum 2b des Stapelplatzes 2. Die Haltemittel 31 sind als Vorsprünge mit einer kleinen Vertiefung (senkrecht zur Zeichenebene) ausgebildet.

Die Palette 6 weist einen Satz von vier Kontermitteln 32 auf, die in y-Richtung von der Palette 6 wegragen. Die Kontermittel 32 sind als Bolzen ausgebildet.

Im dargestellten, eingehakten Zustand liegen die Bolzen der Kontermittel 32 in den Vertiefungen der Vorsprünge der Haltemittel 31 auf. Dadurch wird die Palette 6 gehalten.

Die Breite BH der Haltemittel 31 und die Breite BK der Kontermittel 32 sind jeweils deutlich kleiner als die Breite PB der Palette 6 in x-Richtung. Dadurch ist sichergestellt, dass für das Ausfahren der Palette 6 nur ein kleiner Weg in x-Richtung, verglichen mit der Palettenbreite PB, nötig ist.

**Figur 3b** zeigt schematisch die Palette 6 von Fig. 3a in einem nichteingehakten, ausgefahrenen Zustand. Die Kontermittel 32 sind gegenüber den Haltemitteln 31 in x-Richtung versetzt. Die Palette 6 kann in dieser Position in vertikaler Richtung (senkrecht zur Zeichenebene) nach oben oder unten verfahren werden, ohne dass die Haltemittel 31 und die Kontermittel 32 sich gegenseitig behindern würden.

In den Haltemitteln 31 sind die Vertiefungen 33 ausgebildet, die die Kontermittel in x-Richtung und y-Richtung ausrichten und im eingehakten Zustand in horizontaler Richtung sichern. Bevorzugt werden die Vertiefungen in x- und/oder y-Richtung nach unten hin enger, um die Kontermittel 32 zu führen.

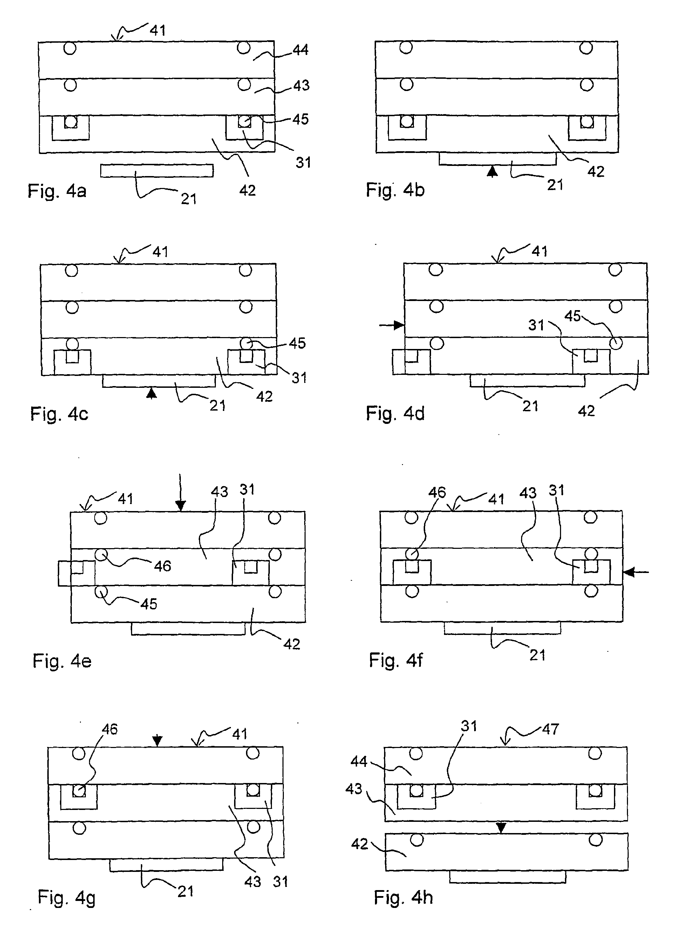

Die **Figuren 4a bis 4h** illustrieren schematisch den erfindungsgemäßen Prozess des Stapeln an einem Stapel 41 von Paletten 42, 43, 44. In der Abfolge von Fig. 4a nach Fig. 4g ist das Abstapeln der untersten Palette 42 vom Stapel 41 dargestellt.

**Fig. 4a** zeigt die Ausgangssituation. Der Stapel 41 wird durch die Kontermittel 45 der untersten Palette 42 in den Haltemitteln 31 gehalten. Eine Hebeeinrichtung 21 steht unterhalb des Stapels 41 zur Verfügung.

**Fig. 4b** zeigt die Situation nach dem Verfahren der Hebeeinrichtung 21 an die Unterseite der Palette 42.

In **Fig. 4c** ist die Hebeeinrichtung 21 und damit auch der Stapel 41 so weit nach oben verfahren, dass die Kontermittel 45 der untersten Palette 42 vollständig oberhalb der Haltemitteln 31 liegen. Dann kann der Stapel 41 in x-Richtung (hier gezeigt nach rechts) verfahren werden.

Den ausgefahrenen Zustand zeigt **Fig. 4d****.** Die Kontermittel 45 der untersten Palette 42 sind so weit seitlich verfahren, dass sie vollständig neben den Haltemitteln 31 angeordnet sind. Dadurch wird eine vertikale Verschiebung des Stapels 41 möglich.

Das seitliche Verfahren (in x-Richtung) erfolgt mit Hilfe des Transportmoduls, auf dem die Hebeeinrichtung 21 befestigt ist.

Der Stapel 41 wird nun nach unten abgesenkt, und zwar so weit, dass die Kontermittel 45 der untersten Palette 42 vollständig unterhalb, und die Kontermittel 46 der zweituntersten Palette 43 vollständig oberhalb der Haltemittel 31 liegen, wie in **Fig. 4e** dargestellt.

Anschließend wird der Stapel 41 mit dem Transportmodul horizontal eingefahren, so dass die Kontermittel 46 der zweituntersten Palette 43 direkt oberhalb der Haltemittel 31 angeordnet sind. Dieser Zustand ist in **Fig. 4f** gezeigt.

Nun wird der Stapel 41 mit Hilfe der Hebeeinrichtung 21 abgesenkt, bis die Kontermittel 46 der zweituntersten Palette 43 in die Haltemittel 31 einhaken, wie in **Fig. 4g** dargestellt.

Bei weiterem Absenken der Hebeeinrichtung 21 wird nur noch die Palette 42 verfahren, wohingegen die Paletten 43, 44 einen verkleinerten Reststapel 47 bilden, der in den Haltemitteln 31 eingehakt verbleibt, siehe **Fig. 4h****.**

Um eine zusätzliche Palette von unten einem Stapel von Paletten hinzuzufügen, kann der oben dargestellte Prozess rückwärts durchlaufen werden, d.h. von Fig. 4h nach Fig. 4a, wobei jeweils entgegen der eingezeichneten Pfeile verfahren wird. Die Palette 42 stellt die zusätzliche Palette dar, und an den Reststapel 47 wird angestapelt.

Man beachte, dass es im Rahmen der Erfindung ausreichend ist, wenn mit der Hebeeinrichtung drei verschiedene z-Positionen anfahrbar sind (etwa mit Anschlägen). Der Gesamthub der Hebeeinrichtung muss lediglich eine Palettenhöhe zuzüglich eines geringen Sicherheitshubs (damit eine Palette mit etwas Sicherheitsabstand unter aufgehängten Paletten verfahren werden kann) betragen.

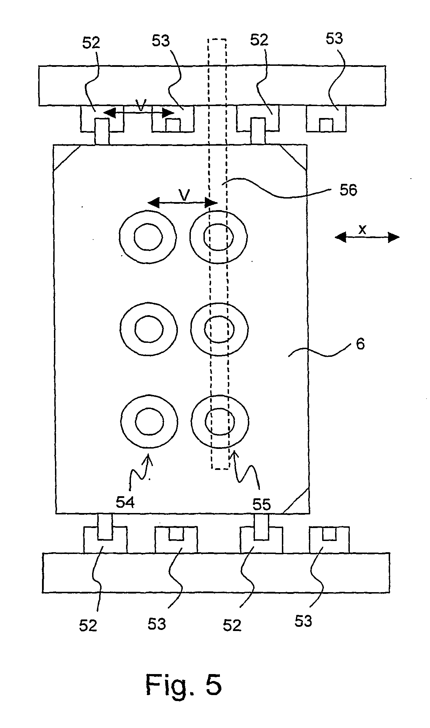

Die **Figur 5** illustriert schematisch einen Vertaktungsplatz 51 für die Erfindung in schematischer Aufsicht. Der Vertaktungsplatz 51 weist einen ersten Satz von Haltemitteln 52 und einen zweiten Satz von Haltemitteln 53 auf. Die beiden Sätze haben in x-Richtung voneinander einen Abstand oder Versatz V.

Der erste Satz von Haltemitteln 52 hält eine Palette 6, auf der mehrere Werkstücke in zwei Reihen 54 und 55 angeordnet sind. An der Palette 6 können Ausnehmungen oder Profile zum halten der Werkstücke vorgesehen sein. Die Reihen 54, 55 haben in x-Richtung auf der Palette 6 einen Abstand oder Versatz, der ebenfalls V beträgt.

Die Werkstücke der rechten Reihe 55 befinden sich direkt unter einer ortsfesten Portal 56 bzw. dessen Führungsschiene, so dass die Werkstücke der Reihe 55 vom Portal handhabbar sind (etwa um die Werkstücke zu einer Bearbeitungsstation zu bringen). Die Werkstücke der Reihe 54 sind hingegen nicht in Reichweite des Portals 56.

Um die Werkstücke der Reihe 54 in die Reichweite des Portals 56 zu bringen, kann die Palette 6 in die Haltemittel 53 umgehängt werden. Dies würde dazu führen, dass die Werkstücke der Reihe 54 um den Betrag V weiter rechts und damit direkt unter dem Portal 56 positioniert wären.

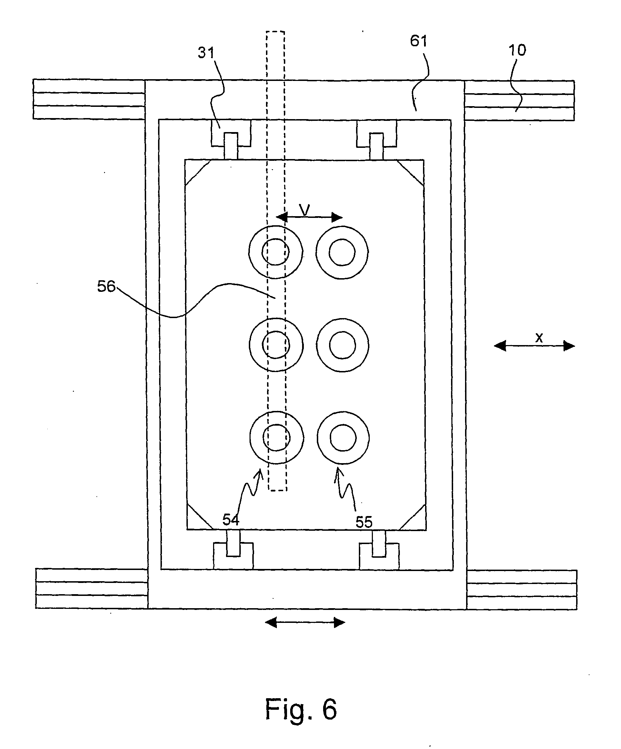

In Figur 6 wird ein Vertaktungsrahmen 61 für die Erfindung schematisch dargestellt. Der Vertaktungsrahmen 61 ist auf einem ortsfesten Rahmen 10 des Bearbeitungsmoduls in x-Richtung verschiebbar, insbesondere motorisch gesteuert. Am Vertaktungsrahmen 61 ist ein Satz von Haltemitteln 31 ausgebildet. An den Haltemitteln 31 ist eine Palette 6 mit zwei Reihen 54, 55 von Werkstücken ausgebildet. Die linke Reihe 54 von Werkstücken ist unter einem ortsfesten Portal 56 angeordnet, das die Werkstücke der Reihe 54 handhaben kann. Um die Werkstücke der Reihe 55 in die Reichweite des Portals 56 zu bringen, kann der Vertaktungsrahmen 61 - und damit auch die Palette 6 - um den Betrag V nach links in x-Richtung verschoben werden. V entspricht dem Abstand oder Versatz der beiden Reihen 54 und 55 in x-Richtung.

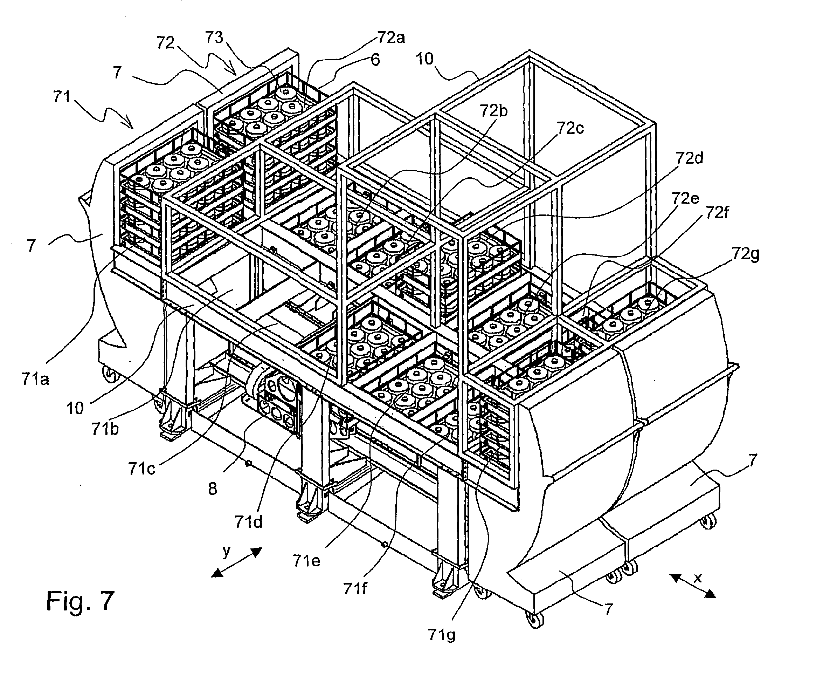

Die Figur 7 zeigt eine Ausführungsform eines erfindungsgemäßen Bereitstellungsmoduls, welches erste Stapelplätze 71a-71g in einer ersten Reihe 71 und zweite Stapelplätze 72a-72g in einer zweiten Reihe 72 aufweist. Die Aufreihung der Stapelplätze erfolgt in jeder Reihe 71, 72 jeweils in x-Richtung, und die Reihen 71, 72 sind in y-Richtung unmittelbar benachbart. An den Stapelplätzen sind keine Paletten, oder eine Palette, oder ein Stapel von Paletten aufgehängt. In den Paletten (beispielhaft markiert ist eine Palette 6) sind größtenteils Werkstücke 73 angeordnet.

Unter den Stapelplätzen ist ein Transfermodul 8 angeordnet, welches als Flächenmodul ausgebildet ist und in x- und y-Richtung unter alle Stapelplätze 71a-71g, 72a-72g verfahren werden kann. Das Transfermodul 8 weist eine Hebeeinrichtung auf, mit der eine unterste Palette an einem Stapelplatz gegriffen werden kann.

Die Stapelplätze 71a, 71g, 72a, 72g sind auf Rollwägen 7 ausgebildet, wobei die Rollwägen 7 jeweils an den beiden gegenüberliegenden Enden beider Reihen 71 und 72 angeordnet sind. Die Rollwägen 7 mitsamt der auf ihnen angeordneten Palettenstapel können einzeln vom ortsfesten Rahmen 10 abgetrennt und verfahren werden (manuell oder mittels eines motorischen Antriebs). Zum Erleichtern des Verfahrens der Rollwägen 7 können im Boden Schienen oder Führungen vorgesehen sein.

Die Stapelplätze 71e, 71f, 72e, 72f werden als Bereitstellungsplätze genutzt. An diesen wird in der Regel nur eine einzelne Palette aufgehängt. Der Rahmen 10 des Bereitstellungsmoduls ist im Bereich dieser Stapelplätze 71e, 71f, 72e, 72f erhöht, um einen leichteren Zugang für Portale zu erhalten (nicht dargestellt). Ein in y-Richtung verlaufendes Portal kann für die Stapelplätze 71 e, 71 f, und ein weiteres, ähnliches Portal für die Stapelplätze 72e, 72f vorgesehen sein (nicht dargestellt). Mit den Portalen können einzelne Werkstücke 73 aus den Paletten 6 entnommen werden oder auf den Paletten 6 abgelegt werden.

Das Transfermodul 8 wird mittels einer nicht dargestellten Elektronik gesteuert.

Zusammenfassend beschreibt die Erfindung ein Bereitstellungsmodul ("Basketbuffer") für stapelbare Paletten (6; 22; 42, 43, 44), auf denen Werkstücke (73) und/oder Werkzeuge angeordnet werden können. Am Bereitstellungsmodul sind mehrere Stapelplätze (1, 2, 3, 4, 5; 71 a-71 g, 72a-72g) hintereinander in einer Reihe (71, 72) angeordnet, an denen jeweils ein Palettenstapel (4a, 5a, 41) in Haltemittel (31, 52, 53) wie Haken eingehängt werden kann. Mindestens ein Transportmodul (8) kann unter den Stapelplätzen die Reihe entlang verfahren, wobei das Transportmodul eine Hebeeinrichtung (21) mitführt. Mit der Hebeeinrichtung kann eine Palette oder ein Palettenstapel von unten ergriffen werden. Das erfindungsgemäße Bereitstellungsmodul kann kostengünstig eine große Zahl von Stapelplätzen und damit Paletten handhaben, wobei auch große Stapelhöhen bestapelt werden können.

## Patentansprüche

1. Bereitstellungsmodul für Paletten (6; 22; 42, 43, 44), auf denen Werkstücke (73) transportiert werden können,
- mit mehreren, ersten Stapelplätzen (1, 2, 3, 4, 5, 71 a-71 g) für Paletten, wobei die ersten Stapelplätze (1, 2, 3, 4, 5; 71 a-71 g) in einer horizontalen x-Richtung hintereinander in einer ersten Reihe (71) angeordnet sind,
wobei jeder Stapelplatz (1, 2, 3, 4, 5; 71 a-71 g, 72a-72g) einen sich in vertikaler Richtung erstreckenden Stapelraum (1b, 2b, 3b, 4b, 5b) und einen Satz Haltemittel (31; 52, 53) umfasst, die am Rand des Stapelraums (1b, 2b, 3b, 4b, 5b) angeordnet sind,
- mit einer Vielzahl von gleichartigen Paletten (6; 22; 42, 43, 44), die vertikal aufeinander gestapelt werden können und jeweils einen Satz Kontermittel (32; 45, 46) aufweisen,
wobei ein Satz der Kontermittel (32; 45, 46) und ein Satz der Haltemittel (31; 52, 53) derart zusammen wirken können, dass eine Palette (6; 22; 42, 43, 44) oder auch ein Stapel (4a, 5a, 41) von Paletten mittels seiner untersten Palette (42) in einem Stapelraum (1b, 2b, 3b, 4b, 5b) aufgehängt werden kann,
- und mit mindestens einer Hebeeinrichtung (21), die in vertikaler Richtung (=z-Richtung) verfahrbar ist und eine Palette (6; 22; 42, 43, 44) oder einen Stapel (4a, 5a, 41) von Paletten von unten greifen kann,
- wobei mindestens ein Transportmodul (8) vorgesehen ist, welches in x-Richtung unterhalb einer Vielzahl der ersten Stapelplätze (1, 2, 3, 4, 5; 71 a-71 g) beliebig verfahrbar ist,
und wobei an jedem Transportmodul (8) eine Hebeeinrichtung (21) ausgebildet ist,
**dadurch gekennzeichnet,**
**dass** die Haltemittel (31; 52, 53) an den Stapelplätzen (1, 2, 3,4, 5; 71a-71 g, 72a-72g) starr ausgebildet sind, und dass das Transportmodul (8) auch zwischen den Stapelplätzen (1, 2, 3, 4, 5 ; 71a-71g) halten kann, so dass die Haltemittel (31; 52, 53) eine Vertikalbewegung der Palette (6 ; 22 ; 42, 43, 44) oder des Stapels (4a, 5a, 41) von Paletten nicht mehr behindern.

2. Bereitstellungsmodul nach Anspruch 1, **dadurch gekennzeichnet, dass** das mindestens eine Transfermodul (8) in einer horizontalen y-Richtung verfahrbar ist, wobei die x-Richtung und die y-Richtung senkrecht zueinander orientiert sind,
dass mehrere zweite Stapelplätze (72a-72g) vorgesehen sind,
wobei die zweiten Stapelplätze (72a-72g) in x-Richtung hintereinander in einer zweiten Reihe (72) angeordnet sind,
und wobei die erste Reihe (71) und die zweite Reihe (72) in y-Richtung benachbart angeordnet sind,
und dass das mindestens eine Transportmodul (8) in x-Richtung auch unterhalb einer Vielzahl der zweiten Stapelplätze (72a-72g) beliebig verfahrbar ist.

3. Bereitstellungsmodul nach Anspruch 2, **dadurch gekennzeichnet, dass** das mindestens eine Transfermodul (8) in y-Richtung durch eine feste Achse mit zwei Anschlägen verfahrbar ist.

4. Bereitstellungsmodul nach einem der vorhergehenden Ansprüche,
**dadurch gekennzeichnet,**
**dass** genau ein Transportmodul (8) vorgesehen ist,
und **dass** das Transportmodul (8) in x-Richtung unterhalb aller Stapelplätze (1, 2, 3, 4, 5; 71 a-71 g, 72a-72g) beliebig verfahrbar ist.

5. Bereitstellungsmodul nach einem der Ansprüche 1 bis 3, **dadurch gekennzeichnet, dass** mehrere Transportmodule (8) vorgesehen sind, wobei jeder Stapelplatz (1, 2, 3, 4, 5; 71 a-71 g, 72a-72g) von wenigstens einem der Transportmodule (8) angefahren werden kann.

6. Bereitstellungsmodul nach einem der vorhergehenden Ansprüche,
**dadurch gekennzeichnet, dass** das mindestens eine Transfermodul (8) in x-Richtung mittels einer NC-Linearachse verfahrbar ist.

7. Bereitstellungsmodul nach einem der vorhergehenden Ansprüche,
**dadurch gekennzeichnet, dass** die Hebeeinrichtung (21) als Scherenhubtisch ausgebildet ist.

8. Breitstellungsmodul nach einem der vorhergehenden Ansprüche,
**dadurch gekennzeichnet, dass** mindestens ein Stapelplatz (1; 71 a, 71 g, 72a, 72g), der sich an einem Ende einer Reihe (71, 72) von Stapelplätzen (1, 2, 3, 4, 5; 71a-71g, 72a-72g) befindet, auf einem Rollwagen (7) ausgebildet ist,
und dass der Rollwagen (7) vom übrigen Bereitstellungsmodul abkoppelbar ist.

9. Bereitstellungsmodul nach Anspruch 8, **dadurch gekennzeichnet, dass** zwei Stapelplätze (71 a, 71 g; 72a, 72g), die sich an gegenüberliegenden Enden einer Reihe (71, 72) von Stapelplätzen (71 a-71 g, 72a-72g) befinden, jeweils auf einem Rollwagen (7) ausgebildet sind.

10. Bereitstellungsmodul nach einem der Ansprüche 8 oder 9, **dadurch gekennzeichnet, dass** eine Schienenführung für einen Rollwagen (7) vorgesehen ist, insbesondere wobei die Schienenführung zu einem weiteren Bereitstellungsmodul führt.

11. Bereitstellungsmodul nach einem der vorhergehenden Ansprüche,
**dadurch gekennzeichnet, dass** die Kontermittel (32; 45, 46) und die Haltemittel (31; 52, 53) in x-Richtung jeweils eine Breite (BK, BH) aufweisen, die sehr viel kleiner ist als die Breite PB einer aufgehängten Palette (6; 22; 42, 43, 44) in der x-Richtung.

12. Breitstellungsmodul nach einem der vorhergehenden Ansprüche,
**dadurch gekennzeichnet, dass** das Bereitstellungsmodul wenigstens drei erste Stapelplätze (1, 2, 3, 4, 5) aufweist.

13. Bereitstellungsmodul nach einem der vorhergehenden Ansprüche,
**dadurch gekennzeichnet, dass** wenigstens ein Portal (56) vorgesehen ist, welches Werkstücke (73) einer Palette (6; 22; 42, 43, 44) eines Stapelplatzes (71e, 71f, 72e, 72f) (=Bereitstellungsplatz) handhaben kann.

14. Bereitstellungsmodul nach Anspruch 13, **dadurch gekennzeichnet, dass** wenigstens zwei Stapelplätze (1, 2, 3, 4, 5; 71 a-71 g, 72a-72g) als Bereitstellungsplätze (71e, 71f, 72e, 72f) ausgebildet sind.

15. Bereitstellungsmodul nach Anspruch 13 oder 14, **dadurch**
**gekennzeichnet, dass** das Portal (56) quer zur x-Richtung verläuft.

16. Bereitstellungsmodul nach einem der Ansprüche 13 bis 15, **dadurch**
**gekennzeichnet, dass** an dem wenigstens einen Portal (56) wenigstens eine Werkstück-Bearbeitungsmaschine, insbesondere eine Drehmaschine oder eine Fräsmaschine, angeordnet ist.

17. Bereitstellungsmodul nach einem der vorhergehenden Ansprüche,
**dadurch gekennzeichnet,**
**dass** ein Vertaktungsplatz vorgesehen ist, der mehrere Sätze von Haltemitteln (52, 53) aufweist, die in x-Richtung um einen Betrag V gegeneinander versetzt am Bereitstellungsmodul angeordnet sind, wobei der Betrag V kleiner ist als die Breite PB einer am Vertaktungsplatz aufgehängten Palette (6; 22; 42, 43, 44) in x-Richtung.

18. Bereitstellungsmodul nach Anspruch 17, **dadurch gekennzeichnet, dass** auf den Paletten (6; 22; 42, 43, 44) mehrere Werkstücke (73) mit einem Versatz von V in der x-Richtung anordenbar sind.

19. Bereitstellungsmodul nach einem der vorhergehenden Ansprüche,
**dadurch gekennzeichnet,**
**dass** ein Vertaktungsrahmen (61) vorgesehen ist, an dem mindestens ein Satz von Haltemitteln (31; 52, 53) vorgesehen ist,
und **dass** der Vertaktungsrahmen (61) mittels einer Transportvorrichtung in x-Richtung verfahrbar ist.

20. Bereitstellungsmodul nach einem der vorhergehenden Ansprüche,
**dadurch gekennzeichnet, dass** zumindest ein Teil der Stapelplätze (1, 2, 3, 4, 5; 71a-71g, 72a-72g) durch Stapelplatzmoduleinheiten ausgebildet ist, wobei die Stapelplatzmoduleinheiten in x-Richtung mit gleichartigen Stapelplatzmoduleinheiten reversibel verbindbar sind.

21. Verfahren zum Aufstapeln einer zusätzlichen Palette (42) unter einen Stapel (47) von Paletten (43, 44),
wobei der Stapel (47) mittels eines Satzes von Kontermitteln (46) einer untersten Palette (43) des Stapels (47) in einem Satz von Haltemitteln eingehängt (31) ist,
und wobei die zusätzliche Palette (42) ebenfalls einen Satz von Kontermitteln (45) aufweist,
mit folgenden Schritten:
a) die zusätzliche Palette (42) wird von unten an die unterste Palette.(43) des Stapels (47) gefahren (=Anstapeln);
b) die zusätzliche Palette (42) samt Stapel (47) wird so weit angehoben, dass die Kontermittel (46) der untersten Palette (43) des Stapels (47) vollständig oberhalb der Haltemittel (31) angeordnet sind (=Ausheben); **gekennzeichnet durch** folgende Schritte:
c) die zusätzliche Palette (42) samt Stapel (47) wird so weit horizontal in eine x-Richtung verfahren, dass die Kontermittel (46) der untersten Palette (43) vollständig seitlich der Haltemittel (31) angeordnet sind (=Ausfahren);
d) die zusätzliche Palette (42) samt Stapel (47) wird so weit angehoben, dass die Kontermittel (45) der zusätzlichen Palette (42) vollständig oberhalb der Haltemittel (31) angeordnet sind (=Anheben);
e) die zusätzliche Palette (42) samt Stapel (47) wird so weit horizontal in x-Richtung zurück verfahren, dass die Kontermittel (45) der zusätzlichen Palette (42) direkt oberhalb der Haltemittel (31) liegen (=Einfahren);
f) die zusätzliche Palette (42) samt Stapel (47) wird abgesenkt, so dass die Kontermittel (45) der zusätzlichen Palette (42) in den Haltemitteln (31) einhaken (=Einhaken).

22. Verfahren zum Abstapeln einer untersten Palette (42) von einen Stapel (41) von Paletten (42, 43, 44),
wobei der Stapel (41) mittels eines Satzes von Kontermitteln (45) der untersten Palette (42) des Stapels (41) in einem Satz von Haltemitteln (31) eingehängt ist,
und wobei eine zweitunterste Palette (43) ebenfalls einen Satz von Kontermitteln (46) aufweist,
mit folgenden Schritten:
a) der Stapel (41) wird so weit angehoben, dass die Kontermittel (45) der untersten Palette (42) des Stapels (41) vollständig oberhalb der Haltemittel (31) angeordnet sind (=Ausheben); **gekennzeichnet durch** folgende Schritte:
b) der Stapel (41) wird so weit horizontal in eine x-Richtung verfahren, dass die Kontermittel (45) der untersten Palette (42) vollständig seitlich der Haltemittel (31) angeordnet sind (=Ausfahren);
c) der Stapel (41) wird so weit abgesenkt, dass die Kontermittel (45) der untersten Palette (42) vollständig unterhalb der Haltemittel (31) angeordnet sind, und die Kontermittel (46) der zweituntersten Palette (43) vollständig oberhalb der Haltemittel (31) angeordnet sind (=Absenken);
d) der Stapel (41) wird so weit horizontal in x-Richtung zurück verfahren, dass die Kontermittel (46) der zweituntersten Palette (43) direkt oberhalb der Haltemittel (31) liegen (=Einfahren);
e) der Stapel (41) wird abgesenkt, so dass die Kontermittel (46) der zweituntersten Palette (43) in den Haltemitteln (31) einhaken (=Einhaken);
f) die unterste Palette (42) wird abgesenkt, so dass diese von der zweituntersten Palette (43) abgetrennt wird (=Abstapeln).

23. Verfahren nach einem der Ansprüche 21 oder 22, **dadurch gekennzeichnet, dass** das Verfahren mit einem Bereitstellungsmodul nach einem der Ansprüche 1 bis 20 durchgeführt wird.

## Claims

1. Supply module for pallets (6; 22; 42, 43, 44) on which workpieces (73) can be transported,
- having several first stacking bays (1, 2, 3, 4, 5, 71a-71g) for pallets, wherein the first stacking bays (1, 2, 3, 4, 5; 71a-71g) are arranged in a horizontal x-direction in succession in a first row (71), wherein each stacking bay (1, 2, 3, 4, 5; 71a-71g, 72a-72g) comprises a stacking space (1b, 2b, 3b, 4b, 5b) extending in the vertical direction and a set of holding means (31; 52, 53), which are arranged at the edge of the stacking space (1b, 2b, 3b, 4b, 5b),
- having a plurality of similar pallets (6; 22; 42, 43, 44), which can be stacked vertically on one another and each comprise a set of lock means (32; 45, 46),
one set of lock means (32; 45, 46) and one set of holding means (31; 52, 53) being able to co-operate such that a pallet (6; 22; 42, 43, 44) or, by means of its bottom pallet (42), also a stack (4a, 5a, 41) of pallets, can be suspended in a stacking space (1b, 2b, 3b, 3b, 5b),
- and having at least one lifting device (21), which is movable vertically (= z-direction) and is able to grip a pallet (6; 22; 42, 43, 44) or a stack (4a, 5a, 41) of pallets from below,
wherein at least one transport module (8) that is movable as desired in the x-direction beneath a plurality of first stacking bays (1, 2, 3, 4, 5; 71a-71g) is provided,
and wherein a lifting device (21) is constructed on each transport module (8),
**characterised**
**in that** the holding means (31; 52, 53) at the stacking bays (1, 2, 3, 4, 5, 71a-71g, 72a-72g) are rigidly formed, and that the transport module (8) can also stop between the stacking bays (1, 2, 3, 4, 5; 71a-71g) such that the holding means (31; 52, 53) no longer obstruct vertical movement of the pallet (6; 22; 42, 43, 44) or the stack (4a, 5a, 41) of pallets.

2. Supply module according to claim 1, **characterised**
**in that** the at least one transfer module (8) is movable in a horizontal y-direction, the x-direction and the y-direction being oriented perpendicular to one another,
**in that** several second stacking bays (72a-72g) are provided, the second stacking bays (72a-72g) being arranged in succession in the x-direction in a second row (72),
and the first row (71) and the second row (72) being arranged adjacent in the y-direction,
and **in that** the at least one transport module (8) is movable as desired in the x-direction also beneath a plurality of second stacking bays (72a-72g).

3. Supply module according to claim 2, **characterised in that** the at least one transfer module (8) is movable in the y-direction by a fixed axle with two stops.

4. Supply module according to any one of the preceding claims, **characterised**
**in that** exactly one transport module (8) is provided,
and **in that** the transport module (8) is movable as desired in the x-direction beneath all stacking bays (1, 2, 3, 4, 5; 71a-71g, 72a-72g).

5. Supply module according to any one of the preceding claims 1 to 3, **characterised in that** several transport modules (8) are provided, wherein each stacking bay (1, 2, 3, 4, 5; 71a-71g, 72a-72g) can be approached by at least one of the transport modules (8).

6. Supply module according to any one of the preceding claims, **characterised in that** the at least one transfer module (8) is movable in the x-direction by means of a NC linear axis.

7. Supply module according to any one of the preceding claims, **characterised in that** the lifting device (21) is in the form of a scissors lift table.

8. Supply module according to any one of the preceding claims, **characterised in that** at least one stacking bay (1; 71a, 71g, 72a, 72g) positioned at one end of a row (71, 72) of stacking bays (1, 2, 3, 4, 5; 71a-71g, 72a-72g) is formed on a dolly (7),
and **in that** the dolly (7) can be uncoupled from the remainder of the supply module.

9. Supply module according to claim 8, **characterised in that** two stacking bays (71a, 71g; 72a, 72g) that are located at opposite ends of a row (71, 72) of stacking bays (71a-71g, 72a-72g) are each formed on a dolly (7).

10. Supply module according to one of the claims 8 or 9, **characterised in that** a rail guide for a dolly (7) is provided, in particular wherein the rail guide leads to a further supply module.

11. Supply module according to any one of the preceding claims, **characterised in that** the lock means (32; 45, 46) and the holding means (31; 52, 53) each have a width (BK, BH) in the x-direction that is very much smaller than the width PB in the x-direction of a suspended pallet (6; 22; 42, 43, 44).

12. Supply module according to any one of the preceding claims, **characterised in that** the supply module comprises at least three first stacking bays (1, 2, 3, 4, 5).

13. Supply module according to any one of the preceding claims, **characterised in that** at least one gantry (56) is provided, which is able to manipulate workpieces (73) of a pallet (6; 22; 42, 43, 44) of a stacking bay (71e, 71f, 72e, 72f) (= supply bay).

14. Supply module according claim 13, **characterised in that** at least two stacking bays (1, 2, 3, 4, 5; 71a-71g, 72a-72g) are in the form of supply bays (71e, 71f, 72e, 72f).

15. Supply module according to one of the claims 13 or 14, **characterised in that** the gantry (56) runs transversely to the x-direction.

16. Supply module according to any one of claims 13 to 15, **characterised in that** at least one workpiece machine tool, in particular a turning lathe or a milling machine, is arranged at the at least one gantry (56).

17. Supply module according to any one of the preceding claims, **characterised in that** a co-ordination bay is provided, which comprises several sets of holding means (52, 53) that are arranged offset in the x-direction by an amount V with respect to one another on the supply module, wherein the amount V is less than the width PB in the x-direction of a pallet (6; 22; 42, 43, 44) suspended at the co-ordination bay.

18. Supply module according to claim 17, **characterised in that** several workpieces (73) are arranged on the pallets (6; 22; 42, 43, 44) with an offset of V in the x-direction.

19. Supply module according to any one of the preceding claims, **characterised in that** a co-ordination frame (61) is provided, on which at least one set of holding means (31; 52, 53) is provided,
and **in that** the co-ordination frame (61) is movable in the x-direction by means of a transport device.

20. Supply module according to any one of the preceding claims, **characterised in that** at least some of the stacking bays (1, 2, 3, 4, 5; 71a-71g, 72a-72g) are formed by stacking bay modular units, wherein the stacking bay modular units can be reversibly connected in the x-direction with similar stacking bay modular units.

21. Method for stacking an additional pallet (42) beneath a stack (47) of pallets (43, 44),
the stack (47) being mounted in a set of holding means (31) by means of a set of lock means (46) of a bottom pallet (43) of the stack (47),
and the additional pallet (42) likewise having a set of lock means (45),
the method comprising the following steps:
a) the additional pallet (42) is moved from below towards the bottom pallet (43) of the stack (47) (= stacking);
b) the additional pallet (42) together with the stack (47) is lifted until the lock means (46) of the bottom pallet (43) of the stack (47) are located completely above the holding means (31) (= lifting out); **characterized by** the following steps:
c) the additional pallet (42) together with the stack (47) is moved so far horizontally in an x-direction that the lock means (46) of the bottom pallet (43) are arranged completely laterally of the holding means (31) (= moving out);
d) the additional pallet (42) together with the stack (47) is lifted until the lock means (45) of the additional pallet (42) are arranged completely above the holding means (31) (= lifting);
e) the additional pallet (42) together with the stack (47) is moved back so far horizontally in the x-direction that the lock means (45) of the additional pallet (42) lie directly above the holding means (31) (= moving in);
f) the additional pallet (42) together with the stack (47) is lowered, so that the lock means (45) of the additional pallet (42) hook into the holding means (31) (=hooking in).

22. Method for de-stacking a bottom pallet (42) from a stack (41) of pallets (42, 43, 44),
the stack (41) being mounted in a set of holding means (31) by means of a set of lock means (45) of the bottom pallet (42) of the stack (41),
and a second from bottom pallet (43) likewise having a set of lock means (46),
the method comprising the following steps:
a) the stack (41) is lifted until the lock means (45) of the bottom pallet (42) of the stack (41) are located completely above the holding means (31) (= lifting out);
**characterized by** the following steps:
b) the stack (41) is moved so far horizontally in an x-direction that the lock means (45) of the bottom pallet (42) are arranged completely laterally of the holding means (31) (= moving out);
c) the stack (41) is lowered until the lock means (45) of the bottom pallet (42) are arranged completely below the holding means (31), and the lock means (46) of the second from bottom pallet (43) are arranged completely above the holding means (31) (= lowering);
d) the stack (41) is moved back so far horizontally in the x-direction that the lock means (46) of the second from bottom pallet (43) lie directly above the holding means (31) (= moving in);
e) the stack (41) is lowered, so that the lock means (46) of the second from bottom pallet (43) hook into the holding means (31) (= hooking in).
f) the bottom pallet (42) is lowered so that it is separated from the second from bottom pallet (43) (= de-stacking).

23. Method according to one of the claims 21 or 22, **characterised in that** the method is carried out with a supply module according to any one of claims 1 to 20.

## Revendications

1. Module de préparation pour palettes (6 ; 22 ; 42, 43, 44) sur lesquelles peuvent être transportées des pièces d'oeuvre (73),
- le module comprenant plusieurs premiers emplacements d'empilement (1, 2, 3, 4, 5 ; 71a-71g) pour palettes, les premiers emplacements d'empilement (1, 2, 3, 4, 5 ; 71a-71g) étant agencés selon une première rangée (71) en se succédant dans une direction x horizontale,
et chaque emplacement d'empilement (1, 2, 3, 4, 5 ; 71a-71g, 72a-72g) englobant un espace d'empilement (1b, 2b, 3b, 4b, 5b) qui s'étend dans la direction verticale, ainsi qu'un jeu de moyens de support (31 ; 52, 53) qui sont agencés au bord de l'espace d'empilement (1b, 2b, 3b, 4b, 5b),
- le module comprenant également un grand nombre de palettes (6 ; 22 ; 42, 43, 44) de même type, qui peuvent être empilées verticalement les unes sur les autres et présentent chacune respectivement un jeu de moyens conjugués (32 ; 45, 46),
un jeu des moyens conjugués (32 ; 45, 46) et un jeu des moyens de support (31 ; 52, 53) pouvant interagir de manière telle qu'une palette (6 ; 22 ; 42, 43, 44) ou bien également une pile (4a, 5a, 41) de palettes puisse être accrochée, au moyen de sa palette inférieure (42), dans un espace d'empilement (1b, 2b, 3b, 4b, 5b),
- et comprenant en outre au moins un dispositif de levage (21) qui peut se déplacer dans la direction verticale (= direction z) et peut saisir une palette (6 ; 22 ; 42, 43, 44) ou une pile (4a, 5a, 41) de palettes par en-dessous,
au moins un module de transport (8) étant prévu dans l'ensemble et pouvant être déplacé de manière quelconque dans la direction x, en-dessous d'un grand nombre des premiers emplacements d'empilement (1, 2, 3, 4, 5 ; 71a-71g), et
un dispositif de levage (21) étant réalisé sur chaque module de transport (8),
**caractérisé**
**en ce que** les moyens de support (31 ; 52, 53) sont réalisés fixes aux emplacements d'empilement (1, 2, 3, 4, 5 ; 71a-71g, 72a-72g), et en ce que le module de transport (8) peut s'arrêter également entre les emplacements d'empilement (1, 2, 3, 4, 5 ; 71a-71g), de sorte que les moyens de support (31 ; 52, 53) n'entravent plus un mouvement vertical de la palette (6 ; 22 ; 42, 43, 44) ou de la pile (4a, 5a, 41) de palettes.

2. Module de préparation selon la revendication 1, **caractérisé**
**en ce que** ledit au moins un module de transfert (8) peut être déplacé dans une direction y horizontale, la direction x et la direction y étant orientées de manière à être perpendiculaires l'une à l'autre,
**en ce que** sont prévus plusieurs deuxièmes emplacements d'empilement (72a-72g),
les deuxièmes emplacements d'empilement (72a-72g) étant agencés selon une deuxième rangée (72) en se succédant dans la direction x,
et la première rangée (71) et la deuxième rangée (72) étant agencées de manière mutuellement voisine l'une de l'autre dans la direction y,
et **en ce que** ledit au moins un module de transport (8) peut être déplacé de manière quelconque dans la direction x, également en-dessous d'un grand nombre des deuxièmes emplacements d'empilement (72a-72g).

3. Module de préparation selon la revendication 2, **caractérisé**
**en ce que** ledit au moins un module de transfert (8) peut être déplacé dans la direction y par un axe fixe avec deux butées.

4. Module de préparation selon l'une des revendications précédentes,
**caractérisé**
**en ce qu'**il est prévu exactement un module de transport (8),
et **en ce que** le module de transport (8) peut être déplacé dans la direction x, de manière quelconque en-dessous de tous les emplacements d'empilement (1, 2, 3, 4, 5 ; 71a-71g, 72a-72g).

5. Module de préparation selon l'une des revendications 1 à 3,
**caractérisé**
**en ce que** sont prévus plusieurs modules de transport (8),
chaque emplacement d'empilement (1, 2, 3, 4, 5 ; 71a-71g, 72a-72g) pouvant être atteint par au moins l'un des modules de transport (8).

6. Module de préparation selon l'une des revendications précédentes,
**caractérisé**
**en ce que** ledit au moins un module de transfert (8) peut être déplacé dans la direction x au moyen d'un axe linéaire à commande numérique.

7. Module de préparation selon l'une des revendications précédentes,
**caractérisé**
**en ce que** le dispositif de levage (21) est réalisé sous la forme d'une table élévatrice à leviers croisés ou parallélogramme articulé.

8. Module de préparation selon l'une des revendications précédentes,
**caractérisé**
**en ce qu'**au moins un emplacement d'empilement (1 ; 71a, 71g, 72a, 72g), qui se trouve à une extrémité d'une rangée (71, 72) d'emplacements d'empilement (1, 2, 3, 4, 5 ; 71a-71g, 72a-72g), est réalisé sur un chariot roulant (7),
et **en ce que** le chariot roulant (7) peut être découplé du restant du module de préparation.

9. Module de préparation selon la revendication 8, **caractérisé**
**en ce que** deux emplacements d'empilement (71a, 71g ; 72a, 72g), qui se trouvent à des extrémités opposées d'une rangée (71, 72) d'emplacements d'empilement (71a-71g, 72a-72g), sont réalisés chacun respectivement sur un chariot roulant (7).

10. Module de préparation selon l'une des revendications 8 ou 9,
**caractérisé**
**en ce qu'**il est prévu un guidage par rail pour un chariot roulant (7), le guidage par rail menant notamment à un autre module de préparation.

11. Module de préparation selon l'une des revendications précédentes,
**caractérisé**
**en ce que** les moyens conjugués (32 ; 45, 46) et les moyens de support (31 ; 52, 53) présentent, dans la direction x, respectivement une largeur (BK, BH) qui est beaucoup plus faible que la largeur PB, dans la direction x, d'une palette accrochée (6 ; 22 ; 42, 43, 44).

12. Module de préparation selon l'une des revendications précédentes,
**caractérisé**
**en ce que** le module de préparation présente au moins trois premiers emplacements d'empilement (1, 2, 3, 4, 5) .

13. Module de préparation selon l'une des revendications précédentes,
**caractérisé**
**en ce qu'**il est prévu au moins un portique (56), qui est en mesure de manipuler des pièces d'oeuvre (73) d'une palette (6 ; 22 ; 42, 43, 44) d'un emplacement d'empilement (71e, 71f, 72e, 72f) (= emplacement de préparation) .

14. Module de préparation selon la revendication 13, **caractérisé**
**en ce qu'**au moins deux emplacements d'empilement (1, 2, 3, 4, 5 ; 71a-71g, 72a-72g) sont réalisés en tant qu'emplacements de préparation (71e, 71f, 72e, 72f).

15. Module de préparation selon la revendication 13 ou la revendication 14,
**caractérisé**
**en ce que** le portique (56) s'étend transversalement à la direction x.

16. Module de préparation selon l'une des revendications 13 à 15,
**caractérisé**
**en ce qu'**au niveau dudit au moins un portique (56), est agencée au moins une machine d'usinage de pièces d'oeuvre, notamment une machine de tournage ou une machine de fraisage.

17. Module de préparation selon l'une des revendications précédentes,
**caractérisé**
**en ce qu'**il est prévu un emplacement d'indexation présentant plusieurs jeux de moyens de support (52, 53), qui sont agencés sur le module de préparation de manière décalée les uns par rapport aux autres d'une valeur V, la valeur V étant inférieure à la largeur PB, dans la direction x, d'une palette accrochée (6 ; 22 ; 42, 43, 44).

18. Module de préparation selon la revendication 17,
**caractérisé**
**en ce que** sur les palettes (6 ; 22 ; 42, 43, 44) peuvent être agencées plusieurs pièces d'oeuvre (73) avec un décalage d'une valeur V dans la direction x.

19. Module de préparation selon l'une des revendications précédentes,
**caractérisé**
**en ce qu'**il est prévu un cadre d'indexation (61) sur lequel est prévu au moins un jeu de moyens de support (31 ; 52, 53),
et **en ce que** le cadre d'indexation (61) peut être déplacé dans la direction x, au moyen d'un dispositif de transport.

20. Module de préparation selon l'une des revendications précédentes,
**caractérisé**
**en ce qu'**au moins une partie des emplacements d'empilement (1, 2, 3, 4, 5 ; 71a-71g, 72a-72g) sont formés par des unités modulaires d'emplacements d'empilement, ces unités modulaires d'emplacements d'empilement pouvant être reliées de manière réversible, dans la direction x, avec des unités modulaires d'emplacements d'empilement de même type.

21. Procédé d'empilement d'une palette (42) supplémentaire sous une pile (47) de palettes (43, 44), la pile (47) étant accrochée, à l'aide d'un jeu de moyens conjugués (46) d'une palette inférieure (43) de la pile (47), dans un jeu de moyens de support (31),
et la palette supplémentaire (42) présentant également un jeu de moyens conjugués (45),
le procédé présentant les étapes suivantes :
a) la palette supplémentaire (42) est déplacée par en-dessous contre la palette inférieure (43) de la pile (47) (= amenée en position d'empilement) ;
b) la palette supplémentaire (42), y compris la pile (47), est soulevée jusqu'à ce que les moyens conjugués (46) de la palette inférieure (43) de la pile (47) soient agencés entièrement au-dessus des moyens de support (31) (= soulèvement de dégagement) ;
et étant **caractérisé par** les étapes suivantes :
c) la palette supplémentaire (42), y compris la pile (47), est déplacée horizontalement dans une direction x jusqu'à ce que les moyens conjugués (46) de la palette inférieure (43) soient agencés de manière à être situés entièrement latéralement aux moyens de support (31) (= déplacement de dégagement) ;
d) la palette supplémentaire (42), y compris la pile (47), est soulevée jusqu'à ce que les moyens conjugués (45) de la palette supplémentaire (42) soient agencés totalement au-dessus des moyens de support (31) (= soulèvement) ;
e) la palette supplémentaire (42), y compris la pile (47), est déplacée horizontalement en retour dans la direction x, jusqu'à ce que les moyens conjugués (45) de la palette supplémentaire (42) se situent directement au-dessus des moyens de support (31) (= replacement) ;
f) la palette supplémentaire (42), y compris la pile (47), est abaissée de manière à ce que les moyens conjugués (45) de la palette supplémentaire (42) viennent s'accrocher dans les moyens de support (31) (= accrochage).

22. Procédé pour retirer une palette inférieure (42) d'une pile (41) de palettes (42, 43, 44),
la pile (41) étant accrochée, à l'aide d'un jeu de moyens conjugués (45) de la palette inférieure (42) de la pile (41), dans un jeu de moyens de support (31),
et l'avant dernière palette inférieure (43) présentant également un jeu de moyens conjugués (46),
le procédé présentant les étapes suivantes :
a) la pile (41) est soulevée jusqu'à ce que les moyens conjugués (45) de la palette inférieure (42) de la pile (41) soient agencés entièrement au-dessus des moyens de support (31) (= soulèvement de dégagement) ;
et étant **caractérisé par** les étapes suivantes :
b) la pile (41) est déplacée horizontalement dans une direction x jusqu'à ce que les moyens conjugués (45) de la palette inférieure (42) soient agencés de manière à être situés entièrement latéralement aux moyens de support (31) (= déplacement de dégagement) ;
c) la pile (41) est abaissée jusqu'à ce que les moyens conjugués (45) de la palette inférieure (42) soient agencés totalement en-dessous des moyens de support (31), et que les moyens conjugués (46) de l'avant dernière palette inférieure (43) soient agencées totalement au-dessus des moyens de support (31) (= abaissement) ;
d) la pile (41) est déplacée horizontalement en retour dans la direction x jusqu'à ce que les moyens conjugués (46) de l'avant dernière palette inférieure (43) se situent directement au-dessus des moyens de support (31) (= replacement) ;
e) la pile (41) est abaissée de manière à ce que les moyens conjugués (46) de l'avant dernière palette inférieure (43) viennent s'accrocher dans les moyens de support (31) (= accrochage) ;
f) la palette inférieure (42) est abaissée, de sorte qu'elle se sépare de l'avant dernière palette inférieure (43) (= retrait de la pile).

23. Procédé selon l'une des revendications 21 ou 22, **caractérisé en ce que** le procédé est mis en oeuvre à l'aide d'un module de préparation selon l'une des revendications 1 à 20.
